# EUROPEAN PATENT APPLICATION

(11) **EP 4 779 759 A1**
(43) Date of publication of application: **22.07.2026**
(21) Application number: 25867267.4
(22) Date of filing: 14.03.2025
(51) Int. Cl.: H01M 10/613

(54) **THERMAL MANAGEMENT ASSEMBLY, THERMAL MANAGEMENT SYSTEM AND BATTERY**

(30) Priority: 27.11.2024 CN 202411720267
(71) Applicant: Eve Energy Co., Ltd., Huizhou, Guangdong 516006 (CN)
(72) Inventor: ZHAO, Yuhang, Huizhou, Guangdong 516006 (CN); ZHOU, Xiao, Huizhou, Guangdong 516006 (CN); YAN, Shiwei, Huizhou, Guangdong 516006 (CN); HUANG, Minzhi, Huizhou, Guangdong 516006 (CN)
(74) Representative: Berggren Oy
(86) International application number: PCT/CN2025/082622
(87) International publication number: WO 2026/113185

(57) **Abstract**

The application provides a thermal management assembly, a thermal management system, and a battery. The thermal management assembly includes a plurality of thermal management pieces, one of which is a first thermal management piece, and the others are second thermal management pieces. An area of at least a portion of a flow cross-section of a main flow channel of the first thermal management piece is smaller than an area of a flow cross-section of a main flow channel of the second thermal management piece.

## Description

The present application claims priority to Chinese patent application No. 202411720267.8 filed with the China National Intellectual Property Administration (CNIPA) on November 27, 2024, and the entire contents of which are incorporated herein by reference.

### TECHNICAL FIELD

The present application relates to the field of battery technology, specifically to a thermal management assembly, a thermal management system, and a battery.

### BACKGROUND

To maintain a battery within a suitable temperature range, a temperature management system is required to heat or cool the battery. In related technologies, a temperature management system includes a pipeline, a thermal management assembly integrated into the pipeline, and a temperature regulation module that adjusts the temperature of a heat exchange medium in the pipeline. The thermal management assembly includes a plurality of heat pipe components, which are connected in parallel to the pipeline. The thermal management piece is thermally coupled with a cell column to manage the temperature of the cell column.

### SUMMARY

In related technologies, the reliability of a battery is relatively poor.

In a first aspect, the present application provides a thermal management assembly. The thermal management assembly includes a thermal management piece including a main flow channel with a first port and a second port at two ends of the main flow channel. The thermal management piece is a plurality of thermal management pieces arranged sequentially at intervals along a first direction. One of the plurality of the thermal management pieces is a first thermal management piece, and the others are second thermal management pieces. The first port of each thermal management piece communicates with the first port of an adjacent one of the thermal management pieces, and the second port of each thermal management piece communicates with the second port of an adjacent one of the thermal management pieces. A sidewall of the first thermal management piece is configured to exchange heat with a heat source, while two sidewalls of the second thermal management piece are configured to exchange heat with a heat source. An area of at least a portion of a flow cross-section of the main flow channel of the first thermal management piece is smaller than an area of a flow cross-section of the main flow channel of the second thermal management piece.

In a second aspect, the present application provides a thermal management system. The thermal management system includes an inlet pipeline, an outlet pipeline, a temperature regulation module, and the aforementioned thermal management assembly. The inlet pipeline communicates with one of the first port and the second port. The outlet pipeline communicates with the other of the first port and the second port. Two ports of the temperature regulation module communicate with the inlet pipeline and the outlet pipeline, respectively. The temperature regulation module is configured to adjust the temperature of a heat exchange medium from the outlet pipeline and deliver the adjusted heat exchange medium to the inlet pipeline.

In a third aspect, the present application provides a battery. The battery includes a casing, a solitary cell column, a plurality of cell groups, and the aforementioned thermal management system. The casing includes a mounting cavity. The thermal management assembly, an end of the inlet pipeline close to the thermal management assembly, and an end of the outlet pipeline close to the thermal management assembly are all disposed within the mounting cavity. The solitary cell column is located on a side of the first thermal management piece and is thermally coupled with the first thermal management piece. The plurality of the cell groups are arranged in one-to-one correspondence with the plurality of the second thermal management pieces. A cell group includes two first cell columns, and the two first cell columns of each cell group are respectively located on both sides of a corresponding one of the second thermal management pieces.

### Beneficial Effects

The present application reduces a flow rate of a heat exchange medium in the first thermal management piece by setting an area of a portion of a flow cross-section of the main flow channel of the first thermal management piece to be smaller than an area of a flow cross-section of the main flow channel of the second thermal management piece, which increases a flow rate in the second thermal management piece, thereby improving consistency in thermal management efficiency between the solitary cell column and grouped cell columns. Thus, while ensuring battery energy density and providing each cell column with a thermal management piece, uniformity of temperature management for cells by the thermal management assembly is enhanced, improving consistency in charging and discharging, battery capacity degradation, and mechanical stress between grouped cell columns and the solitary cell column. Ultimately, the reliability of the battery is enhanced.

### BRIEF DESCRIPTION OF THE DRAWINGS

FIG. 1 is a structural schematic view of a thermal management assembly provided by an embodiment of the present application;
FIG. 2 is a structural schematic view of a thermal management piece provided by an embodiment of the present application;
FIG. 3 is a cross-sectional view along line A-A in FIG. 2;
FIG. 4 is a structural schematic view of an end flow channel of a first thermal management piece provided by an embodiment of the present application;
FIG. 5 is a structural schematic view of an end flow channel of a second thermal management piece provided by an embodiment of the present application;
FIG. 6 is a structural schematic view of a thermal management plate provided by an embodiment of the present application;
FIG. 7 is a structural schematic view of the thermal management piece connected to a first main pipeline provided by an embodiment of the present application;
FIG. 8 is a cross-sectional view along line B-B in FIG. 7;
FIG. 9 is a structural schematic view of the thermal management piece connected to a second main pipeline provided by an embodiment of the present application;
FIG. 10 is a cross-sectional view along line C-C in FIG. 9;
FIG. 11 is an enlarged view at region D in FIG. 1;
FIG. 12 is a structural schematic view of a thermal management system provided by an embodiment of the present application; and
FIG. 13 is a structural schematic view of a battery provided by an embodiment of the present application.

### Description of Reference Numerals:

1 - thermal management assembly; 11 - thermal management piece; 12 - main flow channel; 121 - first port; 122 - second port; 123 - end flow channel; 13 - first thermal management piece; 14 - second thermal management piece;
15 - flow collector; 151 - body; 152 - first nozzle; 153 - second nozzle; 154 - first cavity; 155 - second cavity; 156 - first connection hole; 157 - second connection hole;
16 - thermal management plate; 161 - exchange flow channel;
171 - first main pipeline; 172 - second main pipeline; 181 - first corrugated pipe; 182 - second corrugated pipe;
2 - thermal management system; 21 - inlet pipeline; 22 - outlet pipeline; 23 - temperature regulation module;
3 - battery; 31 - casing; 311 - mounting cavity; 32 - solitary cell column; 33 - cell group; 331 - first cell column

### DETAILED DESCRIPTION

To facilitate understanding of the solution of the present application, before introducing a thermal management assembly, a thermal management system, and a battery provided by embodiments of the present application, related technologies involved in the present application are first described.

In related technologies, a thermal management assembly includes a plurality of heat pipe components, which are connected in parallel to a pipeline. The thermal management piece includes a flow channel configured to circulate a heat exchange medium. The thermal management piece is thermally coupled with a cell column to manage the temperature of the cell column. A cell column includes a plurality of cells arranged sequentially along a length direction of the flow channel. In some battery layouts, every two cell columns form a cell group, and a double-sided heat exchange thermal management piece is disposed between the two cell columns in each cell group, allowing the two cell columns to share the thermal management piece. The above approach provides more space for cell layout, increasing the energy density of the battery, while enabling temperature regulation for each cell column through the thermal management piece.

Limited by battery layout space and to ensure energy density, some battery layouts require a plurality of cell groups and a solitary cell column. To improve the operating temperature of the solitary cell column, a thermal management piece is configured for temperature management, which results in a single-sided heat exchange state for the thermal management piece assigned to the solitary cell column, leading to higher thermal management efficiency for the solitary cell column compared to grouped cell columns. Accordingly, redundancy in the flow of the heat exchange medium for the solitary cell column is caused, resulting in flow waste and poor uniformity in temperature management by the thermal management assembly. Consequently, a significant temperature difference exists between grouped cell columns and the solitary cell column, leading to poor internal temperature uniformity in the battery, which ultimately results in significant differences in charging and discharging, battery capacity degradation, and mechanical stress between grouped cell columns and the solitary cell column, reducing the reliability of the battery.

Therefore, addressing how to rationally configure a thermal management system to enhance battery reliability while ensuring energy density is the problem addressed by the embodiments of the present application.

Accordingly, embodiments of the present application provide a thermal management assembly, a thermal management system, and a battery, which can improve consistency in thermal management efficiency between the solitary cell column and grouped cell columns, which enhances uniformity in temperature management for cells by the thermal management assembly, improving consistency in charging and discharging, battery capacity degradation, and mechanical stress between grouped cell columns and the solitary cell column, thereby enhancing the reliability of the battery.

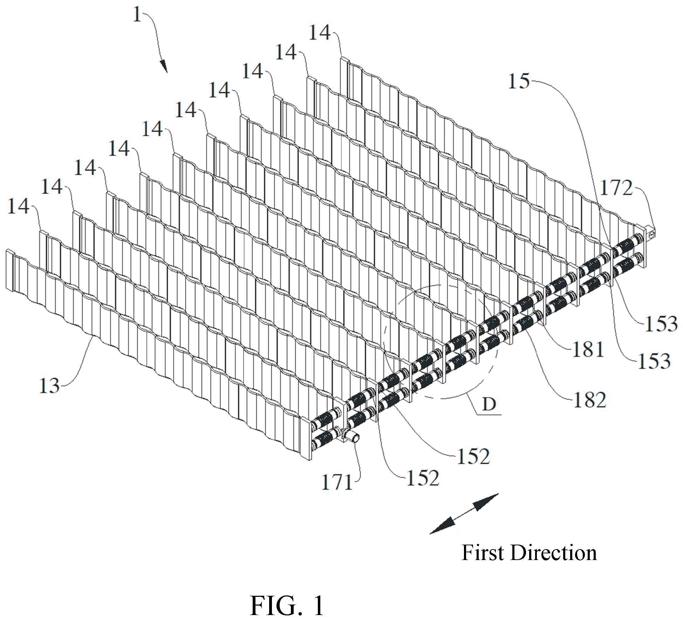

The present application, in conjunction with FIG. 1 to FIG. 13, provides a detailed description of a thermal management assembly, a thermal management system, and a battery through the following content.

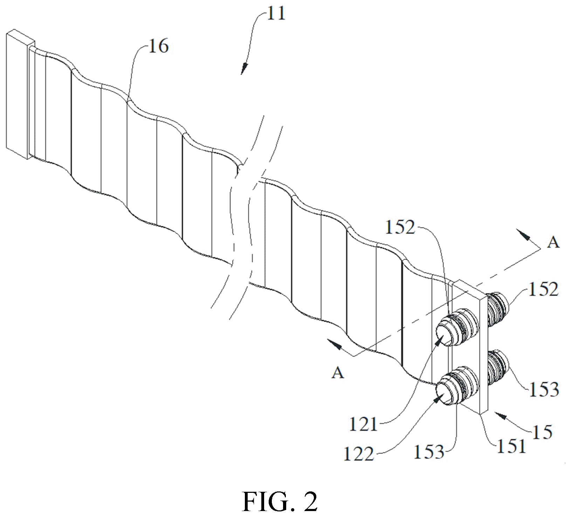

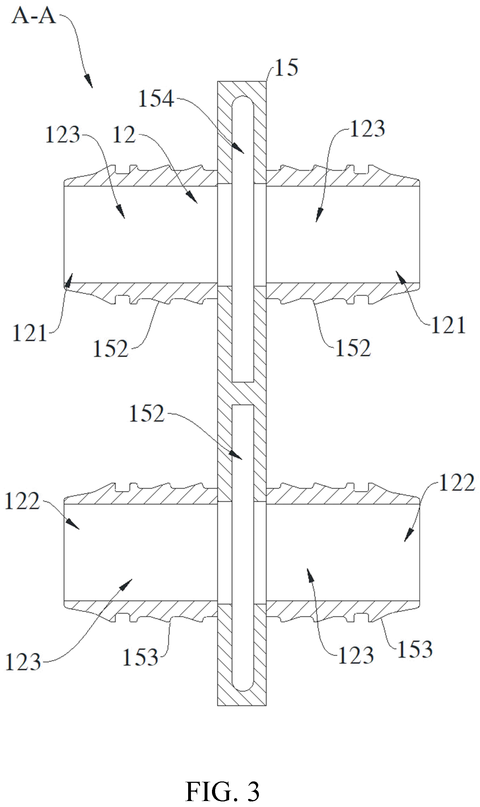

Referring to FIG. 1 to FIG. 3, FIG. 1 is a structural schematic view of the thermal management assembly 1 provided by an embodiment of the present application, FIG. 2 is a structural schematic view of the thermal management piece provided by an embodiment of the present application, and FIG. 3 is a cross-sectional view along line A-A in FIG. 2. An embodiment of the present application provides a thermal management assembly 1. The thermal management assembly 1 includes a thermal management piece 11. The thermal management piece 11 includes a main flow channel 12. The two ends of the main flow channel 12 are a first port 121 and a second port 122, respectively. The thermal management piece 11 is a plurality of thermal management pieces 11. The plurality of the thermal management pieces 11 are arranged sequentially at intervals along a first direction. One of the plurality of the thermal management pieces 11 is a first thermal management piece 13, and the others are second thermal management pieces 14. The first port 121 of each thermal management piece 11 communicates with the first port 121 of an adjacent one of the thermal management pieces 11. The second port 122 of each thermal management piece 11 communicates with the second port 122 of an adjacent one of the thermal management pieces 11. A sidewall of the first thermal management piece 13 is configured to exchange heat with a heat source. Two sidewalls of the second thermal management piece 14 are configured to exchange heat with a heat source. An area of at least a portion of a flow cross-section of the main flow channel 12 of the first thermal management piece 13 is smaller than an area of a flow cross-section of the main flow channel 12 of the second thermal management piece 14.

It can be understood that the first thermal management piece 13 is configured to manage the temperature of the solitary cell column, while the second thermal management piece 14 is configured to manage the temperature of grouped cell columns.

It can be understood that the first thermal management piece 13 may be located at an end of the first direction or between any two of the plurality of the second thermal management pieces 14. The position of the first thermal management piece 13 can be adjusted according to the application scenario, and the present embodiment is not limited thereto.

It can be understood that the distinction between the first thermal management piece 13 and the second thermal management pieces 14 is due to differences in their specific use states, not due to differences in the structure of the thermal management pieces 11 themselves.

It can be understood that a flow cross-section of a flow channel refers to a cross-section perpendicular to the direction of fluid flow in the flow channel. The shape of the flow cross-section of a flow channel is designed differently depending on the scenario. For example, the flow cross-section of a flow channel may be circular or rectangular.

It can be understood that the size of a flow cross-section significantly affects the flow characteristics of a fluid. A larger flow cross-section allows more heat exchange medium to flow, while a smaller flow cross-section allows less heat exchange medium to flow.

Therefore, in embodiments of the present application, by setting an area of a portion of a flow cross-section of the main flow channel 12 of the first thermal management piece 13 to be smaller than an area of a flow cross-section of the main flow channel 12 of the second thermal management piece 14, the flow rate of the heat exchange medium in the first thermal management piece 13 is reduced, thereby reducing redundancy in the flow of the heat exchange medium allocated to the solitary cell column, minimizing flow waste, increasing the flow rate in the second thermal management piece 14, and improving consistency in thermal management efficiency between the solitary cell column and grouped cell columns. Thus, while ensuring battery energy density and providing each cell column with the thermal management piece 11, the uniformity of temperature management for cells by the thermal management assembly 1 is enhanced, improving consistency in charging and discharging, battery capacity degradation, and mechanical stress between grouped cell columns and the solitary cell column. Ultimately, the reliability of the battery can be enhanced.

The reduction in the area of the flow cross-section of the first thermal management piece 13 relative to that of the second thermal management piece 14 can be adjusted based on the length of the main flow channel 12, the cross-sectional area, the extension direction of the main flow channel 12, fluid pressure, and the application scenario of the battery 3.

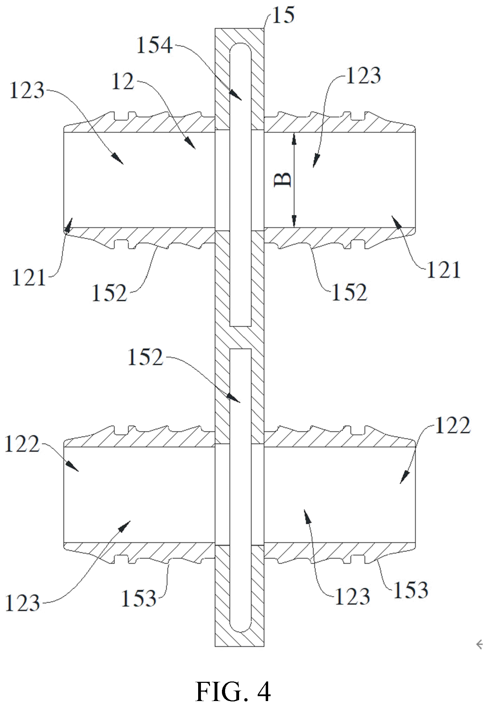

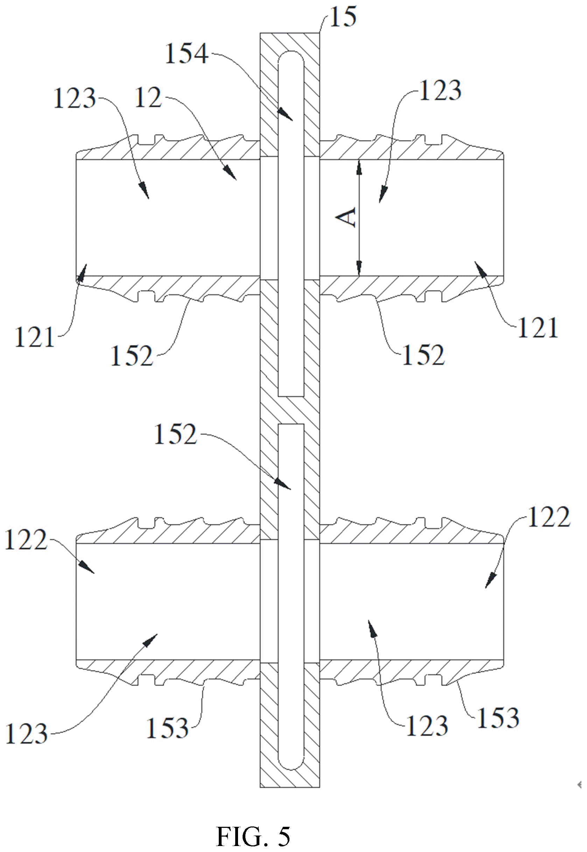

Referring to FIG. 4 and FIG. 5, FIG. 4 is a structural schematic view of an end flow channel 123 of the first thermal management piece 13 provided by an embodiment of the present application, and FIG. 5 is a structural schematic view of an end flow channel 123 of the second thermal management piece 14 provided by an embodiment of the present application. In an embodiment, a portion of the main flow channel 12 near the first port 121 and a portion near the second port 122 are end flow channels 123. An area of a flow cross-section of the end flow channel 123 of the first thermal management piece 13 is smaller than an area of a flow cross-section of the end flow channel 123 of the second thermal management piece 14.

As such, not only consistency in thermal management efficiency between the solitary cell column 32 and grouped cell columns is improved but also the uniformity of flow within the first thermal management piece 13 is enhanced, improving the uniformity of thermal management for each cell in the solitary cell column 32 by the first thermal management piece 13.

In an embodiment, the area of the flow cross-section of the end flow channel 123 of the second thermal management piece 14 is S1, and the area of the flow cross-section of the end flow channel 123 of the first thermal management piece 13 is S2, satisfying: 19%S1 ≤ S2 ≤ 40%S1.

It can be understood that the area S2 of the flow cross-section of the end flow channel 123 of the first thermal management piece 13 includes, but is not limited to 19%S1, 22%S1, 25%S1, 28%S1, 30%S1, 35%S1, 36%S1, 38%S1, 39%S1, or 40%S1.

In embodiments of the present application, through the above limitation, the area of the portion of the flow cross-section of the main flow channel 12 of the first thermal management piece 13 is made smaller than the area of the flow cross-section of the main flow channel 12 of the second thermal management piece 14, while avoiding an excessively small area of the flow cross-section of the end flow channel 123 of the first thermal management piece 13, thereby effectively ensuring the thermal management effect of the first thermal management piece 13 on the solitary cell column.

In an embodiment, a cross-section of an end flow channel 123 is circular, a diameter of the end flow channel 123 of the second thermal management piece 14 is φA, and a diameter of the end flow channel 123 of the first thermal management piece 13 is φB, satisfying: 50%φA ≤ φB ≤ 70%φA.

It can be understood that the diameter φB of the end flow channel 123 of the first thermal management piece 13 includes, but is not limited to 50%φA, 52%φA, 55%φA, 60%φA, 64%φA, 67%φA, or 70%φA.

In the present embodiment, through the above limitation, the area of the portion of the flow cross-section of the main flow channel 12 of the first thermal management piece 13 is made smaller than the area of the flow cross-section of the main flow channel 12 of the second thermal management piece 14, while avoiding an excessively small diameter of the end flow channel 123 of the first thermal management piece 13, thereby effectively ensuring the thermal management effect of the first thermal management piece 13 on the solitary cell column.

Additionally, in the present embodiment, by setting the cross-section of an end flow channel 123 to be circular, a portion of the thermal management piece 11 configured to form the end flow channel 123 has higher structural strength, allowing stress distribution to be more uniform through the wall of a cylindrical structure when subjected to internal fluid pressure.

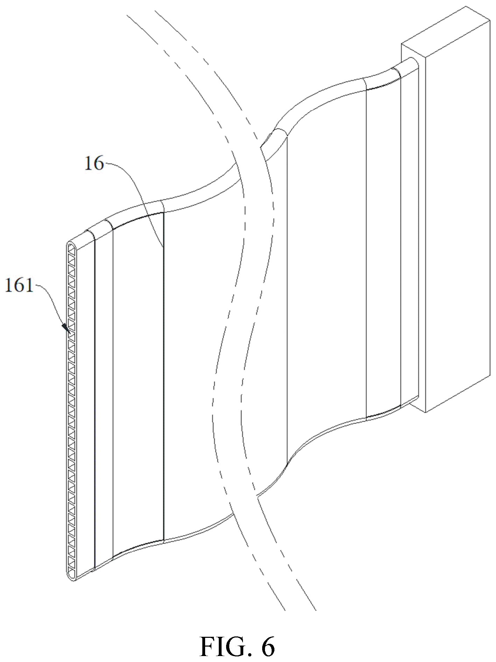

Referring to FIG. 2 and FIG. 6, FIG. 6 is a structural schematic view of a thermal management plate 16 provided by an embodiment of the present application. In an embodiment, the thermal management piece 11 includes a flow collector 15 and a thermal management plate 16. The flow collector 15 includes a body 151 and a first nozzle 152 and a second nozzle 153 connected to the body 151. An inner bore of the first nozzle 152 and an inner bore of the second nozzle 153 are end flow channels 123. The body 151 is provided with a first cavity 154 and a second cavity 155. The thermal management plate 16 includes an exchange flow channel 161 being U-shaped. An end of the thermal management plate 16 is connected to the flow collector 15. Two ends of the exchange flow channel 161 communicate with the first cavity 154 and the second cavity 155, respectively.

The thermal management pieces 11 located at two ends of the first direction are end thermal management pieces, while the remaining thermal management pieces 11 are intermediate thermal management pieces. In each intermediate thermal management piece: two first nozzles 152 are respectively located on two sides of the flow collector 15, and the end flow channels 123 of the first nozzles 152 communicate with the first cavity 154; two second nozzles 153 are respectively located on the sides of the flow collector 15, and the end flow channels 123 of the second nozzles 153 communicate with the second cavity 155.

In each end thermal management piece: an end flow channel 123 of the first nozzle 152 communicates with the corresponding first cavity 154, and an end flow channel 123 of a second nozzle 153 communicates with the corresponding second cavity 155.

In each thermal management piece 11, the first cavity 154, the second cavity 155, the end flow channels 123, and the exchange flow channel 161 collectively define the main flow channel 12. An end of the end flow channel 123 of the first nozzle 152 away from the first cavity 154 is the first port 121. An end of the end flow channel 123 of the second nozzle 153 away from the second cavity 155 is the second port 122.

It can be understood that the connection points between the first nozzle 152, the second nozzle 153, and the body 151 should be sealed to prevent leakage of the heat exchange medium from these points.

It can be understood that one of the first cavity 154 and the second cavity 155 is configured to deliver the exchange medium into the exchange flow channel 161, while the other is configured to discharge the exchange medium from the exchange flow channel 161.

For example, the first nozzle 152 and the second nozzle 153 are welded to the body 151, or the first nozzle 152 and the second nozzle 153 are integrally formed with the body 151, or the first nozzle 152 and the second nozzle 153 are plugged into the body 151 with sealing rings at the plugged points to prevent leakage of the heat exchange medium.

In the present embodiment, through the above configuration, an inlet and an outlet of the thermal management piece 11 are located on the same side, which not only improves temperature uniformity in cell management by the thermal management piece 11 but also reduces the size of the main flow channel 12 in a length direction of the main flow channel 12, thereby facilitating a reduction in the space occupied by the thermal management system within the battery.

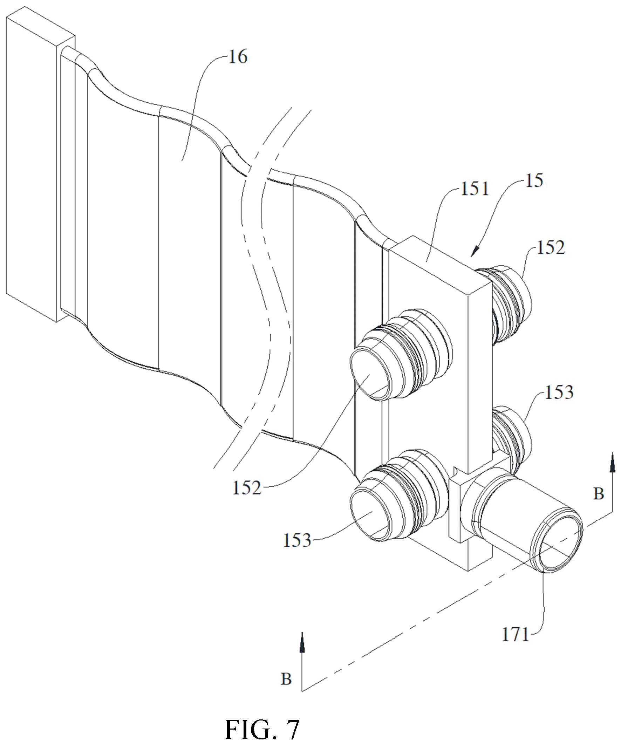

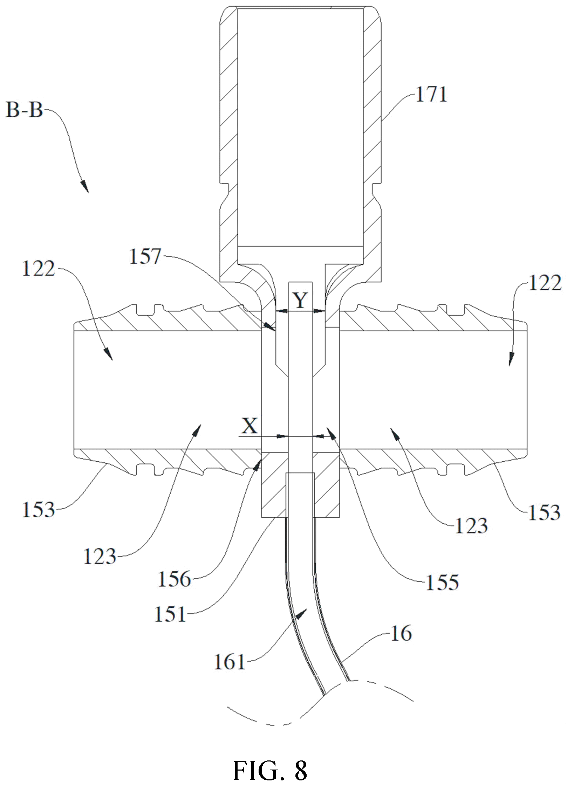

Referring to FIG. 1, FIG. 7, and FIG. 8, FIG. 7 is a structural schematic view of the thermal management piece 11 connected to a first main pipeline 171 provided by an embodiment of the present application, and FIG. 8 is a cross-sectional view along line B-B in FIG. 7. In an embodiment, the thermal management assembly 1 further includes a first main pipeline 171. The flow collector 15 of the thermal management piece 11 is provided with a first connection hole 156 and a second connection hole 157. Two sides of the first connection hole 156 communicate with the first cavity 154 and the second cavity 155, respectively. The second connection hole 157 communicates with the second cavity 155. An end of the thermal management plate 16 is plugged into the first connection hole 156, and an end of the first main pipeline 171 is plugged into the second connection hole 157.

It can be understood that the first main pipeline 171 can be sealed and welded, sealed and glued, or integrally formed with the flow collector 15.

It can be understood that when the first main pipeline 171 is configured to deliver a heat exchange medium to the main flow channel 12, the first main pipeline 171 is an inlet pipe, and the second cavity 155 is an inlet cavity. Correspondingly, the first cavity 154 is a discharge cavity. Conversely, when the main flow channel 12 discharges the heat exchange medium into the first main pipeline 171, the first main pipeline 171 is a discharge pipe, and the second cavity 155 is a discharge cavity. Correspondingly, the first cavity 154 is an inlet cavity.

In the present embodiment, through the above configuration, the overall structure is simple, easy to manufacture, improves manufacturing efficiency, and controls manufacturing costs.

Referring to FIG. 8, in an embodiment, along the first direction, the first connection hole 156 has a width dimension X, and an inner bore of the first main pipeline 171 near an end of the second cavity 155 has a width dimension Y, satisfying: X < Y ≤ 10X.

It can be understood that the width dimension Y of the inner bore of the first main pipeline 171 near an end of the second cavity 155 includes, but is not limited to 1.1X, 2X, 2.2X, 3X, 3.5X, 4X, 4.8X, 5X, 5.5X, 6X, 7X, 8X, 9X, or 10X.

In the present embodiment, the space around the thermal management piece 11 not occupied by cells can be fully utilized to enlarge an end of the inner bore of the first main pipeline 171 near the second cavity 155 relative to the first connection hole 156, thereby reducing flow resistance of the heat exchange medium at the location and improving the inlet or discharge efficiency of the thermal management system 2.

Specifically, the first main pipeline 171 is a discharge pipe.

Referring to FIG. 8, in an embodiment, an end of the inner bore of the first main pipeline 171 away from the second cavity 155 has a diameter φZ, satisfying: Y + 2mm ≤ φZ ≤ 5Y

The diameter φZ of the inner bore of the first main pipeline 171 includes, but is not limited to Y + 2mm, 2Y, 2.5Y, 3Y, 3.2Y, 3.5Y, 3.8Y, 4Y, 4.2Y, 4.5Y, 4.6Y, 4.8Y, or 5Y.

In the present embodiment, the space around the thermal management piece 11 not occupied by cells can be fully utilized to enlarge an end of the inner bore of the first main pipeline 171 away from the second cavity 155 relative to an end near the second cavity 155, thereby reducing flow resistance of the heat exchange medium at the location and improving the inlet or discharge efficiency of the thermal management system.

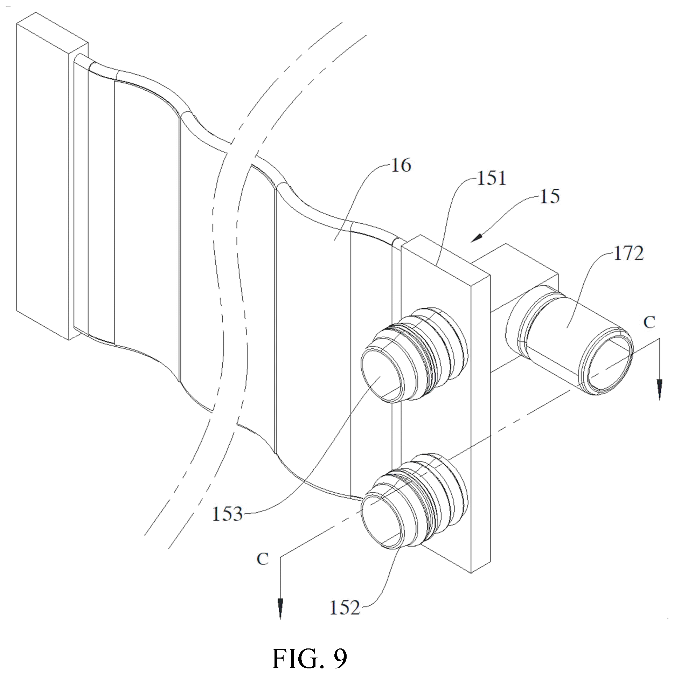

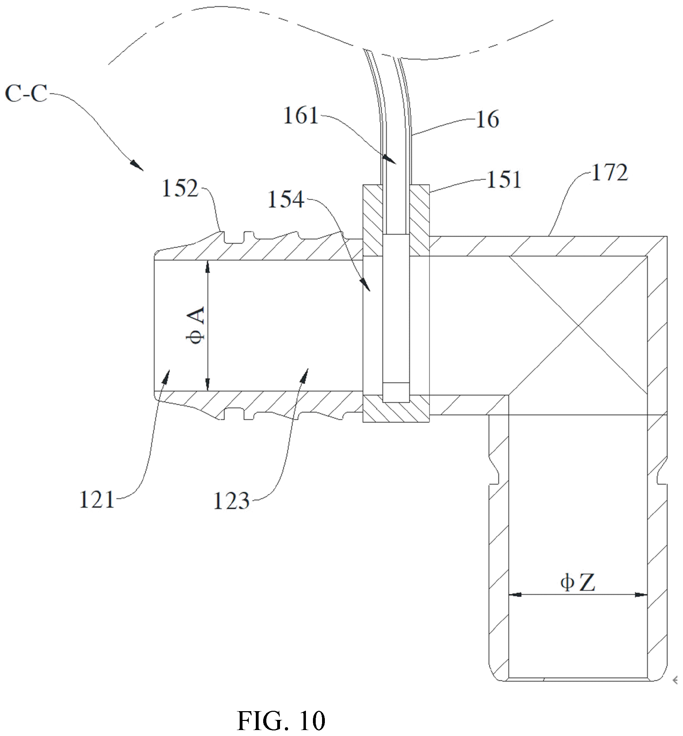

Referring to FIG. 9 and FIG. 10, FIG. 9 is a structural schematic view of the thermal management piece 11 connected to a second main pipeline 172 provided by an embodiment of the present application, and FIG. 10 is a cross-sectional view along line C-C in FIG. 9. In an embodiment, the thermal management assembly 1 further includes a second main pipeline 172. An end of the second main pipeline 172 communicates with the first cavity 154 of the flow collector 15 of the second thermal management piece 14. An inner diameter of the second main pipeline 172 is φC, and an inner diameter of the first nozzle 152 of the second thermal management piece 14 is φA, satisfying: φC > φA.

It can be understood that the second main pipeline 172 can be sealed and welded, sealed and glued, or integrally formed with the flow collector 15.

It can be understood that when the second main pipeline 172 is configured to deliver a heat exchange medium to the main flow channel 12, the second main pipeline 172 is an inlet pipe, and the first cavity 154 is an inlet cavity. Correspondingly, the second cavity 155 is a discharge cavity. Conversely, when the main flow channel 12 discharges the heat exchange medium into the second main pipeline 172, the second main pipeline 172 is a discharge pipe, and the first cavity 154 is a discharge cavity. Correspondingly, the second cavity 155 is an inlet cavity.

In the present embodiment, through the above configuration, the space around the thermal management piece 11 not occupied by cells can be fully utilized to enlarge an inner bore of the second main pipeline 172 relative to an inner diameter of the first nozzle 152, thereby reducing flow resistance of the heat exchange medium at the location and improving the inlet or discharge efficiency of the thermal management system.

Specifically, the second main pipeline 172 is an inlet pipe connected to the flow collector 15 of the second thermal management piece 14 farthest from the first thermal management piece 11.

Optionally, the second main pipeline 172 is an L-shaped pipeline, including two pipe segments arranged at an angle. One pipe segment is parallel to the first direction, and the other is parallel to a length direction of the main flow channel 12.

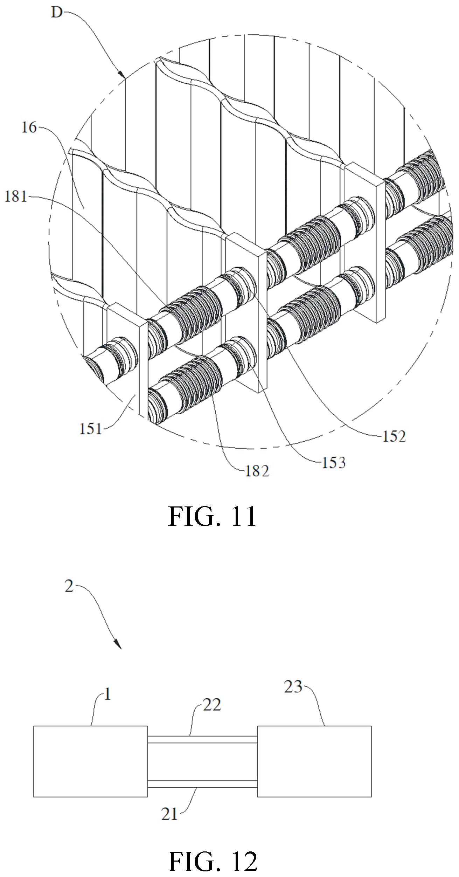

Referring to FIG. 11, FIG. 11 is an enlarged view at region D in FIG. 1. In an embodiment, the thermal management assembly 1 further includes a plurality of first corrugated pipes 181 and a plurality of second corrugated pipes 182. The plurality of the first corrugated pipes 181 are alternately distributed with the plurality of the thermal management pieces 11, and two ends of each first corrugated pipe 181 communicate with the first ports 121 of adjacent ones of the thermal management pieces 11 respectively. The plurality of the second corrugated pipes 182 are alternately distributed with the plurality of the thermal management pieces 11, and two ends of each second corrugated pipe 182 communicate with the second ports 122 of the adjacent ones of the thermal management pieces 11 respectively.

The two ends of the first corrugated pipe 181 are respectively expanded and connected to the first nozzles 152 of adjacent ones of the thermal management pieces 11. Specifically, an end of the first nozzle 152 away from the flow collector 15 connected to the first nozzle 152 is inserted into the first corrugated pipe 181 and sealed with a sealing ring.

The two ends of the second corrugated pipe 182 are respectively expanded and connected to the second nozzles 153 of adjacent ones of the thermal management pieces 11. Specifically, an end of the second nozzle 153 away from the flow collector 15 connected to the second nozzle 153 is inserted into the second corrugated pipe 182 and sealed with a sealing ring.

In the present embodiment, by connecting adjacent thermal management pieces 11 with the first corrugated pipe 181 and a second corrugated pipe 182, the adjustable length of the first corrugated pipe 181 and the second corrugated pipe 182 can absorb assembly and material tolerances, thereby reducing the assembly difficulty of the thermal management assembly 1 and improving assembly efficiency.

In an embodiment, the thermal management piece 11 located at an end of the first direction is the first thermal management piece 13. Thus, before thermally coupling the thermal management assembly 1 with cell columns, positioning the first thermal management piece 13 at an end of the first direction facilitates quick identification of the position of the first thermal management piece 13 by relevant operators based on the arrangement order of the thermal management pieces 11, improving the convenience of inspection, testing, or maintenance operations.

In an embodiment, the first thermal management piece 13 includes a first sidewall and a second sidewall opposite the first sidewall. The first sidewall is configured to exchange heat with a heat source. The second sidewall is provided with a thermal insulation layer, and/or a thickness of the second sidewall is greater than a thickness of the first sidewall.

Specifically, the second sidewall is provided with a thermal insulation layer, or a thickness of the second sidewall is greater than a thickness of the first sidewall, or the second sidewall is provided with a thermal insulation layer and a thickness of the second sidewall is greater than a thickness of the first sidewall.

In the present embodiment, by providing a thermal insulation layer and/or increasing thickness, the efficiency of heat exchange with the surrounding environment by a sidewall of the first thermal management piece 13 not thermally coupled with a heat source is reduced, effectively avoiding energy waste in the thermal management assembly and improving the heat exchange efficiency of the thermal management assembly.

Referring to FIG. 1 to FIG. 12, FIG. 12 is a structural schematic view of a thermal management system 2 provided by an embodiment of the present application. Accordingly, an embodiment of the present application provides a thermal management system 2. The thermal management system 2 includes an inlet pipeline 21, an outlet pipeline 22, a temperature regulation module 23, and the thermal management assembly 1 provided by some embodiments of the present application. The inlet pipeline 21 communicates with one of the first port 121 and the second port 122. The outlet pipeline 22 communicates with the other of the first port 121 and the second port 122. Two ports of the temperature regulation module 23 communicate with the inlet pipeline 21 and the outlet pipeline 22, respectively. The temperature regulation module 23 is configured to adjust the temperature of a heat exchange medium from the outlet pipeline 22 and deliver the adjusted heat exchange medium to the inlet pipeline 21.

It can be understood that the temperature regulation module 23 may include a compressor, a condenser, and an evaporator connected by pipelines, with a valve configured to achieve cooling or heating of cells.

In the present embodiment, by adopting the thermal management assembly 1 provided by some embodiments of the present application, consistency in thermal management efficiency between the solitary cell column 32 and grouped cell columns is improved. Thus, while ensuring the energy density of a battery 3 and providing each cell column with the thermal management piece 11, the uniformity of temperature management for cells by the thermal management assembly 1 is enhanced, improving consistency in charging and discharging, battery capacity degradation, and mechanical stress between grouped cell columns and the solitary cell column. Ultimately, the reliability of the battery is enhanced.

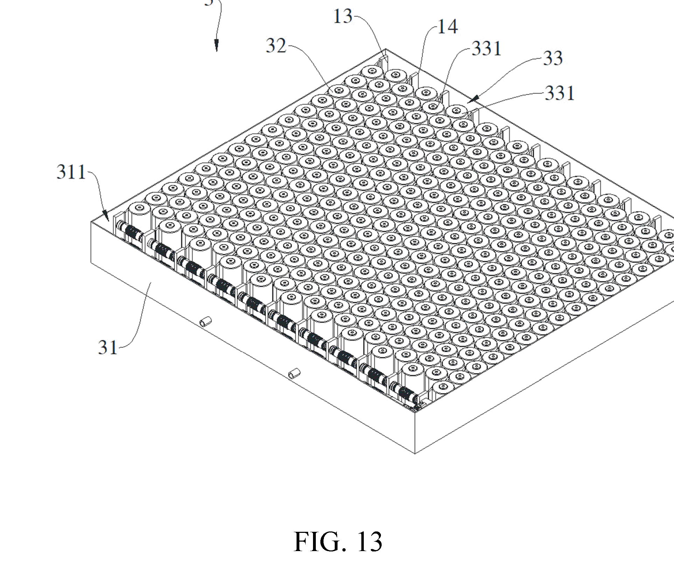

Referring to FIG. 13, FIG. 13 is a structural schematic view of a battery 3 provided by an embodiment of the present application. An embodiment of the present application provides a battery 3. The battery 3 includes a casing 31, a solitary cell column 32, a plurality of cell groups 33, and the thermal management system 2 provided by some embodiments of the present application. The casing 31 includes a mounting cavity 311. The thermal management assembly 1, an end of the inlet pipeline 21 close to the thermal management assembly 1, and an end of the outlet pipeline 22 close to the thermal management assembly 1 are all disposed within the mounting cavity 311. The solitary cell column 32 is located on a side of the first thermal management piece 11 and is thermally coupled with the first thermal management piece 11. The plurality of the cell groups 33 are arranged in one-to-one correspondence with the plurality of the second thermal management pieces 14. A cell group 33 includes two first cell columns 331, and the two first cell columns 331 of each cell group 33 are respectively located on two sides of a corresponding one of the second thermal management pieces 14.

In the present embodiment, by adopting the thermal management system 2 provided by some embodiments of the present application, consistency in thermal management efficiency between the solitary cell column 32 and grouped cell columns is improved. Thus, while ensuring the energy density of a battery 3 and providing each cell column with the thermal management piece 11, the uniformity of temperature management for cells by the thermal management assembly 1 is enhanced, improving consistency in charging and discharging, capacity degradation of the battery 3, and mechanical stress between grouped cell columns and the solitary cell column 32. Ultimately, the reliability of the battery 3 is enhanced.

Additionally, both the solitary cell column 32 and the first cell column 331 include a plurality of cells arranged sequentially. The cells are cylindrical cells. The thermal management plate 16 is a serpentine plate in contact with a cylindrical surface of a cell, thereby increasing a contact surface area between the thermal management plate 16 and the cell, which enhances thermal management efficiency.

## Claims

1. A thermal management assembly (1), comprising:
a thermal management piece (11) comprising a main flow channel (12), wherein the main flow channel (12) comprises a first port (121) and a second port (122) at two ends of the main flow channel (12);
wherein the thermal management piece (11) is a plurality of thermal management pieces (11) arranged sequentially at intervals along a first direction, one of the plurality of the thermal management pieces (11) is a first thermal management piece (13), and the others are second thermal management pieces (14);
wherein the first port (121) of each thermal management piece (11) communicates with the first port (121) of an adjacent one of the thermal management pieces (11), and the second port (122) of each thermal management piece (11) communicates with the second port (122) of an adjacent one of the thermal management pieces (11);
wherein a sidewall of the first thermal management piece (13) is configured to exchange heat with a heat source, two sidewalls of the second thermal management piece (14) are configured to exchange heat with a heat source, and an area of at least a portion of a flow cross-section of the main flow channel (12) of the first thermal management piece (13) is smaller than an area of a flow cross-section of the main flow channel (12) of the second thermal management piece (14).

2. The thermal management assembly (1) according to claim 1, wherein a portion of the main flow channel (12) near the first port (121) and a portion near the second port (122) are end flow channels (123), and an area of a flow cross-section of the end flow channel (123) of the first thermal management piece (13) is smaller than an area of a flow cross-section of the end flow channel (123) of the second thermal management piece (14).

3. The thermal management assembly (1) according to claim 2, wherein the area of the flow cross-section of the end flow channel (123) of the second thermal management piece (14) is S1, and the area of the flow cross-section of the end flow channel (123) of the first thermal management piece (13) is S2, satisfying: 19%S1 ≤ S2 ≤ 40%S1.

4. The thermal management assembly (1) according to claim 3, wherein a cross-section of the end flow channel (123) is circular, a diameter of the end flow channel (123) of the second thermal management piece (14) is φA, and a diameter of the end flow channel (123) of the first thermal management piece (13) is φB, satisfying: 50%φA ≤ φB ≤ 70%φA.

5. The thermal management assembly (1) according to any one of claims 1 to 4, wherein the thermal management piece (11) comprises a flow collector (15) and a thermal management plate (16), the flow collector (15) comprises a body (151) and a first nozzle (152) and a second nozzle (153) connected to the body (151), an inner bore of the first nozzle (152) and an inner bore of the second nozzle (153) are the end flow channels (123), and a first cavity (154) and a second cavity (155) are provided in the body (151);
the thermal management plate (16) comprises an exchange flow channel (161) being U-shaped, an end of the thermal management plate (16) is connected to the flow collector (15), and two ends of the exchange flow channel (161) communicate with the first cavity (154) and the second cavity (155), respectively;
the thermal management pieces (11) located at two ends of the first direction are end thermal management pieces (11), and the remaining thermal management pieces (11) are intermediate thermal management pieces (11);
in each intermediate thermal management piece (11): two first nozzles (152) are respectively located on two sides of the flow collector (15), and the end flow channels (123) of the first nozzles (152) communicate with the first cavity (154); two second nozzles (153) are respectively located on the sides of the flow collector (15), and the end flow channels (123) of the second nozzles (153) communicate with the second cavity (155);
in each end thermal management piece (11): an end flow channel (123) of the first nozzle (152) communicates with the first cavity (154), and an end flow channel (123) of the second nozzle (153) communicates with the second cavity (155);
wherein, in each thermal management piece (11), the first cavity (154), the second cavity (155), the end flow channels (123), and the exchange flow channel (161) collectively define the main flow channel (12), an end of the end flow channel (123) of the first nozzle (152) away from the first cavity (154) is the first port (121), and an end of the end flow channel (123) of the second nozzle (153) away from the second cavity (155) is the second port (122).

6. The thermal management assembly (1) according to claim 5, wherein the thermal management assembly (1) further comprises a first main pipeline (171), a first connection hole (156) and a second connection hole (157) are provided in the flow collector (15) of one of the thermal management pieces (11), two sides of the first connection hole (156) communicate with the first cavity (154) and the second cavity (155), respectively, the second connection hole (157) communicates with the second cavity (155); an end of the thermal management plate (16) is plugged into the first connection hole (156), and an end of the first main pipeline (171) is plugged into the second connection hole (157).

7. The thermal management assembly (1) according to claim 6, wherein, along the first direction, the first connection hole (156) has a width dimension X, an inner bore of the first main pipeline (171) near an end of the second cavity (155) has a width dimension Y, satisfying: X < Y ≤ 10X.

8. The thermal management assembly (1) according to claim 6 or 7, wherein an end of the inner bore of the first main pipeline (171) away from the second cavity (155) has a diameter φZ, satisfying: Y + 2mm ≤ φZ ≤ 5Y.

9. The thermal management assembly (1) according to any one of claims 5 to 8, wherein the thermal management assembly (1) further comprises a second main pipeline (172), an end of the second main pipeline (172) communicates with the first cavity (154) of the flow collector (15) of the second thermal management piece (14), an inner diameter of the second main pipeline (172) is φC, an inner diameter of the first nozzle (152) of the second thermal management piece (14) is φA, satisfying: φC > φA.

10. The thermal management assembly (1) according to any one of claims 1 to 9, wherein the thermal management assembly (1) further comprises:
a plurality of first corrugated pipes (181) alternately distributed with the plurality of the thermal management pieces (11), wherein two ends of each first corrugated pipe (181) communicate with the first ports (121) of adjacent ones of the thermal management pieces (11) respectively; and
a plurality of second corrugated pipes (182) alternately distributed with the plurality of the thermal management pieces (11), wherein two ends of each second corrugated pipe (182) communicate with the second ports (122) of adjacent ones of the thermal management pieces (11) respectively.

11. The thermal management assembly (1) according to any one of claims 1 to 10, wherein the thermal management piece (11) located at an end of the first direction is the first thermal management piece (13).

12. The thermal management assembly (1) according to any one of claims 1 to 11, wherein the first thermal management piece (13) comprises a first sidewall and a second sidewall opposite the first sidewall, the first sidewall is configured to exchange heat with a heat source;
wherein a thermal insulation layer is provided on the second sidewall, and/or a thickness of the second sidewall is greater than a thickness of the first sidewall.

13. A thermal management system (2), comprising:
a thermal management assembly (1) according to any one of claims 1 to 12;
an inlet pipeline (21) communicating with one of the first port (121) and the second port (122);
an outlet pipeline (22) communicating with the other of the first port (121) and the second port (122); and
a temperature regulation module (23) comprising two ports communicating with the inlet pipeline (21) and the outlet pipeline (22), respectively, wherein the temperature regulation module (23) is configured to adjust the temperature of a heat exchange medium from the outlet pipeline (22) and deliver the adjusted heat exchange medium to the inlet pipeline (21).

14. A battery (3), comprising:
a casing (31) comprising a mounting cavity (311);
a thermal management system (2) according to claim 13, wherein the thermal management assembly (1), an end of the inlet pipeline (21) close to the thermal management assembly (1), and an end of the outlet pipeline (22) close to the thermal management assembly (1) are disposed within the mounting cavity (311);
a solitary cell column (32) located on a side of the first thermal management piece (13) and thermally coupled with the first thermal management piece (13); and
a plurality of cell groups (33) arranged in one-to-one correspondence with the plurality of the second thermal management pieces (14), wherein each cell group (33) comprises two first cell columns (331), and the two first cell columns (331) of each cell group (33) are respectively located on two sides of a corresponding one of the second thermal management pieces (14).
